# EUROPÄISCHE PATENTSCHRIFT

(11) **EP 2 809 554 B1**
(45) Veröffentlichungstag und Bekanntmachung des Hinweises auf die Patenterteilung: **13.04.2016**
(21) Anmeldenummer: 13703349.4
(22) Anmeldetag: 29.01.2013
(51) Int. Cl.: B60R 19/34, B60R 19/03

(54) **DEFORMATIONSELEMENT, INSBESONDERE FÜR STOßFÄNGER AN KRAFTFAHRZEUGEN**
DEFORMATION ELEMENT, IN PARTICULAR FOR BUMPERS ON MOTOR VEHICLES
ÉLÉMENT DE DÉFORMATION, EN PARTICULIER POUR PARE-CHOCS POUR VÉHICULES À MOTEUR

(30) Priorität: 01.02.2012 DE 102012001940
(43) Veröffentlichungstag der Anmeldung: 10.12.2014
(73) Patentinhaber: Volkswagen Aktiengesellschaft, 38440 Wolfsburg (DE)
(72) Erfinder: HEBERLING, Patrick, 39359 Calvörde (DE); KRÜGER, Matthias, 38442 Wolfsburg (DE)
(86) Internationale Anmeldenummer: PCT/EP2013/051625
(87) Internationale Veröffentlichungsnummer: WO 2013/113672

(56) Entgegenhaltungen:
- WO-A1-2011/058152
- WO-A1-2011/073315
- FR-A1- 2 835 792
- JP-A- 2005 047 387

## Beschreibung

Die vorliegende Erfindung betrifft ein Deformationselement, insbesondere für Stoßfänger an Kraftfahrzeugen, gemäß dem Oberbegriff des Patentanspruchs 1.

Es sind zahlreiche Vorschläge zur Auslegung derartiger Deformationselemente bekannt, die insbesondere zwischen Längsträgern eines Fahrzeugaufbaus und einem Stoßfänger-Querträger angeordnet sind und gezielt Aufprallenergie bei einem Fahrzeugcrash abbauen sollen. Die zumeist aus Stahlblech hergestellten, rohrförmigen Deformationselemente sind dabei so konzipiert, dass ein Energieabbau durch gezielte Schwachstellen wie Wellungen, Einbuchtungen, Durchmessersprünge mit anschließendem Übereinanderstülpen der Rohrabschnitte, etc. stattfinden kann. Es erfolgt daher unter Abbau der Deformationsenergie eine Verformung der Deformationselemente.

Alternativ dazu kann der Abbau der Deformationsenergie nicht durch Verformung sondern durch ein Auseinanderbrechen des Deformationselements erfolgen. Hierzu kann das Deformationselement mit Sollbruchstellen versehen sein, an denen keine Materialverformung erfolgt, sondern vielmehr das Deformationselement unter Abbau der Deformationsenergie in voneinander separate Bruchsegmente auseinanderbricht. Von diesen kann beispielhaft ein crashzugewandtes Bruchsegment sich im weiteren Crashverlauf verlagern, während ein in ein crashabgewandte Bruchsegment ortsfest an der Fahrzeugkarosserie befestigt bleibt.

Aus der WO 2011/073315 A1 ist ein gattungsgemäßes Deformationselement bekannt. Das Deformationselement weist eine Materiallage aus einem faserverstärkten Kunststoff auf, deren Fasergewebe nach einem crashbedingten Auseinanderbrechen des Deformationselementes freigelegt ist. Aus der JP 2005 047 387 A ist eine Stoßfängeranordnung mit einem Querträger bekannt, der zusammen mit zeitlichen Deformationselementen eine einstückige Baueinheit bildet. Aus der FR 2 835 792 A1 ist ein Querträger bekannt, dessen Fasergewebe in der Fahrzeugquerrichtung ausgerichtet ist.

Aufgabe der Erfindung ist es, ein Deformationselement der gattungsgemäßen Art vorzuschlagen, das bei einem geringeren Gewicht einen vergleichbaren oder verbesserten Energieabbau ermöglicht.

Die Lösung dieser Aufgabe gelingt mit den Merkmalen des Patentanspruchs 1. Vorteilhafte und besonders zweckmäßige Weiterbildungen der Erfindung sind Gegenstand der abhängigen Ansprüche.

Die Erfindung betrifft ein Deformationselement, das zumindest eine Sollbruchstelle aufweist, an der im Crashfall das Deformationselement in zumindest ein crashzugewandtes, sich im Crashverlauf verlagerndes Bruchsegment und in ein crashabgewandtes, ortfestes Bruchsegment auseinanderbricht. Die Erfindung beruht auf dem Sachverhalt, dass ein ausreichender Abbau der unfallbedingten Deformationsenergie alleine durch das Auseinanderbrechen des Deformationselements nur schwer erreichbar ist. Vor diesem Hintergrund ist das Deformationselement mit zumindest einer Materiallage aus einem faserverstärkten Kunststoff mit einem, in einem Bettungswerkstoff (Matrix) eingebetteten Fasergewebe hergestellt. Nach dem Auseinanderbrechen des Deformationselements ist das Fasergewebe abschnittsweise zwischen den Bruchsegmenten freigelegt. Die Bruchsegmente sind daher nach wie vor lose miteinander in Verbindung. Es ergibt sich somit ein neuartiges Wirkprinzip des Deformationselements, bei dem bei auftretenden Aufprallkräften das Fasergewebe aus dem Bettungswerkstoff (Matrix) herausgerissen wird und dadurch gezielt Aufprallenergie abgebaut wird.

Nach dem Auseinanderbrechen des Deformationselements kann das crashzugewandte Bruchsegment am crashabgewandten ortsfesten Bruchsegment vorbeiverlagert und unter weiterem Abbau von Deformationsenergie weiteres Fasergewebe-Material aus dem Bettungswerkstoff herausreißen.

Der zwischen den Bruchsegmenten freigelegte Abschnitt des Fasergewebes wird im Crashverlauf zugbeansprucht. Damit der freigelegte Fasergewebe-Abschnitt nicht auseinanderreißt, ist dieser mit einer hohen Zugfestigkeit auszulegen. Zur Steigerung der Zugfestigkeit können die Fasern des Fasergewebes in der Zugrichtung ausgerichtet sind. Der zwischen den Bruchsegmenten freigelegte Abschnitt des Fasergewebes kann im Vergleich zu dem Faser-Kunststoff-Verbund des Deformationselements weitgehend ohne Formstabilität sowie biegeschlaff sein, jedoch mit hoher Zugfestigkeit ausgeführt sein. Der Bettungswerkstoff ist dagegen im Vergleich zum Fasergewebe spröde ausgeführt.

Erfindungsgemäß bildet die Materiallage des Deformationselements zusammen mit beidseitigen äußeren Materiallagen einen Dreischichtaufbau. Die äußeren Materiallagen können ebenfalls aus einem faserverstärkten Kunststoff hergestellt sein. Das Fasergewebe der mittleren Materiallage kann bevorzugt mit einer im Vergleich zu den äußeren Materiallagen hohen Faserfestigkeit ausgebildet sein. Zudem können die Fasern der mittleren Materiallage im Wesentlichen in der Längsrichtung und die Fasern der äußeren Faserlagen in einer dazu senkrechten und/oder geneigten Richtung ausgerichtet sein.

Die Fasern der mittleren Materiallage können durch Carbon-, Kevlar-, Aramid-, Borfasern oder dergleichen gebildet sein. Die Fasern der äußeren Lagen können dagegen durch Glasfasern gebildet sein. Der Bettungswerkstoff die Fasergewebe der Materiallagen kann ein Epoxydharz, Polyesterharz und/oder ein Vinylesterharz sein.
In einer besonderen Ausführungsform kann das Deformationselement ein Rohr- oder Mehrkantprofilteil sein. Die Sollbruchstelle kann bevorzugt ein Durchmessersprung sein, an dem die Bruchsegmente ineinander derart übergehen, dass bei einer crashbedingten Krafteinleitung ein Übereinanderstülpen der Bruchsegmente erfolgt.

Als besonders zweckmäßig hat es sich ferner erwiesen, wenn die mittlere Lage der Fasern im Wesentlichen in Längsrichtung (in der hauptsächlichen Kraftwirkungsrichtung) und die äußeren Faserlagen in einer dazu senkrechten und/oder geneigten Richtung ausgerichtet sind. Dadurch legen sich die in Zugrichtung zugfesten Fasern ohne Auseinanderbrechen des Deformationselementes nur gezielt um.

In einer bevorzugten Auslegung des Deformationselements kann die Materialstärke der mittleren Lage gleich oder größer als die jeweilige, äußere Lage sein, um somit das Verformungsverhalten gezielt einzustellen. Dabei können ferner die festigkeitsmäßigen Faseranteile der äußeren Lagen gleich oder kleiner dem Faseranteil der mittleren Lage entsprechen.

Bei einer weiteren, bevorzugten Auslegung des Deformationselements können die gesamten Faseranteile in der Matrix zwischen 37% bis 67%, die Faseranteile der äußeren Lagen zwischen 17% und 72% und die Faseranteile der mittleren Lage zwischen 23% und 63% liegen, um die geforderten Festigkeitseigenschaften herzustellen. Zudem können die Faserdurchmesser der Fasern zwischen 5µm und 17µm ausgelegt sein.

Weitere konstruktiv vorteilhafte Konzeptionen des Deformationselements können integrierte Schwachstellen wie Wellungen, Einbuchtungen, etc. entsprechend den nachstehenden Unteransprüchen sein.

Üblicherweise sind die Querträger einer Stoßfänger-Anordnung aus einem Metallblech aus Aluminium oder Stahl geformt, wodurch das Gesamtgewicht der Stoßfänger-Anordnung entsprechend groß ist. Vor diesem Hintergrund ist es im Sinne einer Gewichtsreduzierung von Vorteil, dem Querträger als ein Kunststoffbauteil auszuführen. Der Querträger kann bevorzugt grundsätzlich von gleichem Schichtaufbau sein wie das oben beschriebene Deformationselement. Von daher kann sich auf die Beschreibung des Schichtaufbaus des Deformationselementes bezogen werden. Im Einzelnen kann der Querträger zumindest eine Materiallage aus einem faserverstärkten Kunststoff mit einem, in einem Bettungswerkstoff eingebetteten Fasergewebe aufweisen. Das Fasergewebe kann zur Steigerung der Zugfestigkeit des Querträgers in der Fahrzeugquerrichtung ausgelegt sein. Entsprechend können die Fasern des Fasergewebes in der Fahrzeugquerrichtung ausgerichtet sein. Der oben erwähnte faserverstärkte Kunststoff mit dem, in dem Bettungswerkstoff eingebetteten Fasergewebe kann das Basisteil des Querträgers bilden. Zur weiteren Formstabilisierung kann dieses Querträger-Basisteil mit einer äußeren Materiallage überzogen sein. Die äußere Materiallage kann ebenfalls aus einem faserverstärkten Kunststoff hergestellt sein, dessen Festigkeit im Vergleich zum faserverstärkten Kunststoff des inneren Querträger-Basisteiles reduziert ist.

Der als Kunststoffbauteil ausgebildete Querträger kann in beliebiger Profilform gestaltet sein, beispielhaft als ein Rechteckprofil aus Vollmaterial, als ein geschlossenes Hohlprofil oder als ein C-förmig in der Fahrzeuglängsrichtung offenes Hohlprofil.

Bei einer Ausführung als Kunststoffbauteil kann der Querträger zusammen mit den beiden seitlichen Deformationselementen bevorzugt in einem gemeinsamen Arbeitsschritt hergestellt werden. Dadurch kann der Querträger zusammen mit den Deformationselementen eine materialeinheitliche und/oder einstückige Baueinheit bilden.

Bei einer Frontalkollision des Fahrzeuges ist eine einwandfreie Krafteinleitung vom Querträger in die beiden seitlichen Deformationselemente von großer Bedeutung, um die oben erwähnte Verformung der Deformationselemente zum Abbau der Crashenergie zu gewährleisten. Vor diesem Hintergrund kann gemäß einer Ausführungsform der Querträger in der Fahrzeuglängsrichtung dem Deformationselement vorgelagert sein, das heißt die vordere Stirnseite des Deformationselementes ist vom Querträger überdeckt.

Es wurde die Problematik erkannt, dass im Kollisionsfall speziell die seitlichen Fügestellen, an denen die Deformationselemente mit dem Querträger verbunden sind, Schwachstellen bei der Kraftüberleitung bilden.

Vor diesem Hintergrund ist eine, die Crashanforderungen erfüllende Gestaltung der Fügestellen von großer Relevanz. Beispielhaft kann das Fasergewebe des Deformationselementes mit zumindest einem Gewebestreifen über die Stirnseite des Deformationselementes hinaus in der Fahrzeuglängsrichtung nach vorne verlängert sein. Der nach vorne verlängerte Gewebestreifen kann integraler Bestandteil des Kunststoff-Querträgers sein, das heißt insbesondere im Kunststoffmaterial des Querträgers eingebettet sein. Durch den im Kunststoffmaterial des Querträgers eingebetteten Gewebestreifen des Deformationselementes ist im Crashfall ein stofflicher Zusammenhalt zwischen dem Querträger und dem Deformationselement gewährleistet.

Beispielhaft kann das Fasergewebe des Deformationselementes mit einem oberen und einem unteren horizontalen Gewebestreifen nach vorne verlängert sein, zwischen denen der Querträger angeordnet ist. Die oberen und unteren Gewebestreifen können das oben erwähnte Querträger-Basisteil umgreifen und bevorzugt als eine geschlossene Schleife ausgebildet sein, die das Querträger-Basisteil umschlingt. In diesem Falle definierte die Schleife eine Aufnahmetasche, in der das Ende des Querträger-Basisteils eingesetzt ist. Anschließend kann über die so gestaltete Fügestelle eine äußere Materiallage des Querträgers laminiert werden.

Zudem kann das Fasergewebe des Deformationselementes mit einem, in der Fahrzeugquerrichtung seitlich inneren und/oder seitlich äußeren vertikalen Gewebestreifen nach vorne verlängert sein. Zwischen den beiden vertikalen Gewebestreifen kann der Querträger (bzw. dessen Basisteil) angeordnet sein.

Die in der Fahrzeuglängsrichtung nach vorne verlängerten Gewebestreifen der beiden Deformationselemente können unter Bildung eines gemeinsamen, in der Fahrzeugquerrichtung verlaufenden Querstreifens miteinander verbunden sein. In diesem Fall verläuft das Fasergewebe durchgängig von dem einen Deformationselement über die Fügestelle entlang des Querträgers bis zum anderen Deformationselement auf der gegenüberliegenden Fahrzeugseite.

Die Faserrichtung des Fasergewebes bzw. der Gewebestreifen ist in der Belastungsrichtung angepasst, wodurch eine günstige Belastung im Hinblick auf das Material (Faserverbund und Matrix) sowie eine homogene Krafteileitung in die Fahrzeugstruktur erfolgen kann. Bei einer Frontalkollision werden die unidirektionalen Fasern des Querträgers beansprucht und geben die Crashenergie an die bidirektionalen Gelegestrukturen der äußeren Materiallage weiter.

In einer weiteren Ausführungsform kann das Deformationselement in der Fahrzeugquerrichtung nach außen dem Querträger vorgelagert sein, das heißt das Deformationselement überdeckt die Stirnseite des Querträgers bzw. die Stirnseite des Querträger-Basisteils . In diesem Fall kann das Fasergewebe des Querträgers mit zumindest einem Gewebestreifen über die Querträger-Stirnseite in der Fahrzeugquerrichtung hinaus seitlich nach außen verlängert sein. Der seitlich verlängerte Gewebestreifen kann integraler Bestandteil des Deformationselementes sein. Der in der Fahrzeugquerrichtung seitlich nach außen verlängerte Gewebestreifen kann integraler Bestandteil des Kunststoff-Querträgers sein, das heißt insbesondere im Kunststoffmaterial des Querträgers eingebettet sein. Durch den im Kunststoffmaterial des Querträgers eingebetteten Gewebestreifen des Deformationselementes ist im Crashfall ein stofflicher Zusammenhalt zwischen dem Querträger und dem Deformationselement gewährleistet. Beispielhaft kann das Fasergewebe des Deformationselementes mit einem oberen und einem unteren horizontalen Gewebestreifen seitlich nach außen verlängert sein, zwischen denen das Deformationselement angeordnet ist. Die oberen und unteren Gewebestreifen können das Deformationselement umgreifen und bevorzugt als eine geschlossene Schleife ausgebildet sein, die das Deformationselement umschlingt. In diesem Falle definierte die Schleife eine Aufnahmetasche, in der das Ende des Deformationselements eingesetzt ist. Anschließend kann über die so gestaltete Fügestelle eine äußere Materiallage laminiert werden.

Zudem kann das Fasergewebe des Querträgers mit einem, in der Fahrzeuglängsrichtung vorderen vertikalen Gewebestreifen seitlich nach außen verlängert sein. Der vordere vertikale Gewebestreifen überdeckt die vordere Stirnseite des Deformationselements.

Die vorstehend erläuterten und/oder in den Unteransprüchen wiedergegebenen vorteilhaften Aus- und/oder Weiterbildungen der Erfindung können - außer zum Beispiel in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und Weiterbildungen sowie deren Vorteile werden nachfolgend anhand von Zeichnungen näher erläutert.

Es zeigen:
- Fig. 1: ein rohrförmiges Deformationselement aus faserverstärktem Kunststoff in einem Längsschnitt, mit einem Durchmessersprung als Sollbruchstelle zum Einleiten eines gezielten Stülpvorgangs bei einem Fahrzeugcrash;
- Fig. 2: eine vergrößerte Schnittdarstellung des Materialaufbaus des Deformationselements im Bereich der Sollbruchstelle;
- Fig. 3 und 4: jeweils Ansichten entsprechend der Fig. 2, anhand derer das Herausreißen des Fasergewebes im Crashfall veranschaulicht ist;
- Fig. 5: in einer Ansicht entsprechend der Fig. 2 ein weiteres Ausführungsbeispiel eines Materialaufbaus des Deformationselements;
- Fig. 6: in einer vereinfachten Darstellung die Ausrichtung der inneren und äußeren Faserlagen des in der Fig. 5 gezeigten Deformationselements;
- Fig. 7: eine raumbildliche Ansicht eines alternativen Deformationselements mit umfangsmäßig verteilten Einbuchtungen; und
- Fig. 8: ein weiteres, alternativ ausgebildetes Deformationselement mit Wellungen zum Verformen bei auftretenden Aufprallkräften nach dem Faltprinzip.
- Fig. 9: in perspektivischer Prinzipdarstellung eine Stoßfängeranordnung;
- Fig. 10 bis 13: in unterschiedlichen Ansichten eine Fügestelle zwischen dem Deformationselement und dem Querträger gemäß einem ersten Ausführungsbeispiel; sowie
- Fig. 14 und 15: in unterschiedlichen Ansichten eine Fügestelle zwischen dem Deformationselement und dem Querträger gemäß einem zweiten Ausführungsbeispiel.

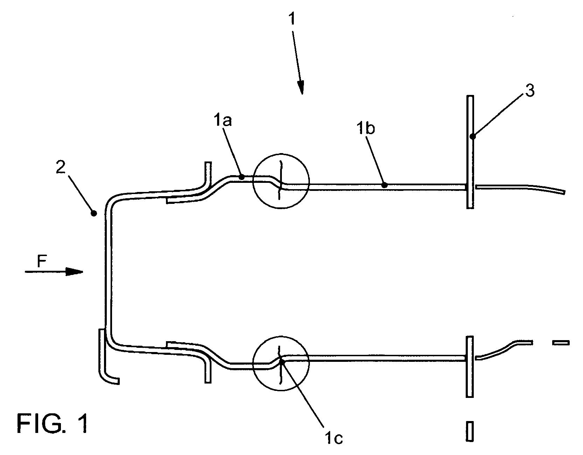

In der Fig. 1 ist ein rohrförmiges Deformationselement 1 aus faserverstärktem Kunststoff mit einem zum Beispiel kreisförmigen, ovalen oder gerundet polygonförmigen Querschnitt gezeigt, das frontseitig oder heckseitig eines Personenkraftfahrzeugs angeordnet sein kann und einerseits an einem Stoßfänger-Querträger 2 und andererseits an eine Flanschplatte 3 eines nicht weiter dargestellten Längsträgers angebunden beziehungsweise befestigt ist. In bekannter Weise sind zumindest zwei Deformationselemente 1 an beiden Seiten des Kraftfahrzeugs vorgesehen.

Das Deformationselement 1 weist einen an den Querträger 2 angebundenen Rohrabschnitt 1 a etwas geringerer Wandstärke und einen an die Flanschplatte 3 angebundenen Rohrabschnitt 1b größerer Wandstärke auf, die an einer einen Durchmessersprung bildenden Sollbruchstelle S ineinander übergehen. Die beiden Rohrabschnitte 1 a, 1 b bilden vordefinierte Bruchsegmente, die im später beschriebenen Crashfall an der Sollbruchstelle S auseinanderbrechen. Nachfolgend sind die Rohrabschnitte 1a, 1b auch bei Beschreibung des noch nicht unfallbedingt auseinandergebrochenen Deformationselements 1 als Bruchsegmente bezeichnet.

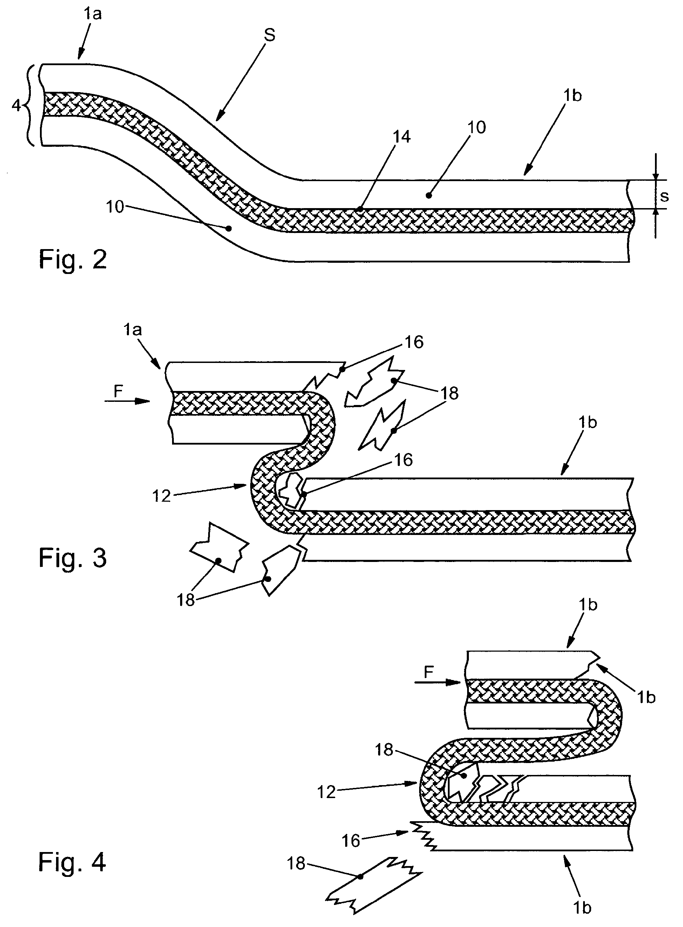

In der Fig. 2 ist eine vergrößerte Schnittdarstellung des Deformationselements 1 im Bereich der Sollbruchstelle S gezeigt. Daraus ist der grundsätzliche Materialaufbau des Deformationselements erkennbar. Demnach ist eine Materialschicht 4 aus einem faserverstärkten Kunststoff vorgesehen ist, bei dem ein Fasergewebe 14 in einem Bettungswerkstoff 10 beziehungsweise eine Matrix eingebettet ist. Der Bettungswerkstoff 10 überdeckt beidseitig das Fasergewebe 14 mit jeweils einer Schichtdicke s.

Anhand der weiteren Fig. 3 und 4 ist das Deformationsverhalten des Deformationselements 1 bei einer Frontalkollision beschrieben, bei der ein Kraftfahrzeug auf ein Hindernis aufprallt oder sich ein Fremdaufprall (zum Beispiel Auffahrunfall) ereignet. Bei dem in der Kraftrichtung F gerichteten Aufprall des Kraftfahrzeugs bricht das Deformationselement 1 an der Sollbruchstelle S auseinander. Dadurch entstehen gemäß den Fig. 3 und 4 Bruchsegmente 1 a, 1 b. Von diesen wird das crashzugewandte Bruchsegment 1 a im Crashverlauf nach hinten verlagert, während das crashabgewandte Bruchsegmentes 1 b ortsfest an der Karosserie befestigt bleibt. Das crashzugewandte Bruchsegment 1a wird beginnend von der Sollbruchstelle S in einem Aufprallenergie abbauenden Stülpvorgang über das steifere, ortsfeste Bruchsegment 1 b definierter Länge geschoben, wodurch zunächst größere Strukturschäden am Kraftfahrzeug vermieden sind.

Gemäß den Fig. 3 und 4 weisen die Bruchsegmente 1a, 1b einander zugewandte Bruchkanten 16 auf. Die Bruchsegmente 1a, 1b sind an ihren Bruchkanten 16 über einen freigelegten Abschnitt 12 des Fasergewebes 14 noch lose miteinander verbunden. Im in den Fig. 3 und 4 gezeigten Stülpvorgang wird das crashzugewandte Bruchsegment 1a am crashabgewandten, ortsfesten Bruchsegment 1 b vorbeiverlagert. Die Bruchkante 16 des crashzugewandten Bruchsegments 1a bewegt sich daher in de Fig. 3 und 4 in der Kraftrichtung F nach links. Dadurch wird unter Abbau von Deformationsenergie ständig neues Bruchmaterial 18 aus dem Bettungswerkstoff 10 herausgebrochen. Die Länge des freigelegten Abschnitts 12 des Fasergewebes 14 steigt somit im Crashverlauf an.

Der zwischen den Bruchsegmenten 1a, 1 b freigelegte Abschnitt 12 des Fasergewebes 14 ist nicht mehr fest im Bettungswerkstoff 10 eingebunden und daher im Vergleich zum Faser-Kunststoff-Verbund des Deformationselements 1 weitgehend ohne Formstabilität, das heißt biegeschlaff. Im freigelegten Abschnitt 12 wird das Fasergewebes 14 im Crashfall zugbeansprucht. Um ein Auseinanderreißen zu verhindern, weist das Fasergewebe 14 in der Zugrichtung eine erhöhte Faserfestigkeit auf. Zur Steigerung der Zugfestigkeit sind die Fasern des Fasergewebes 14 in der Zugrichtung ausgerichtet.

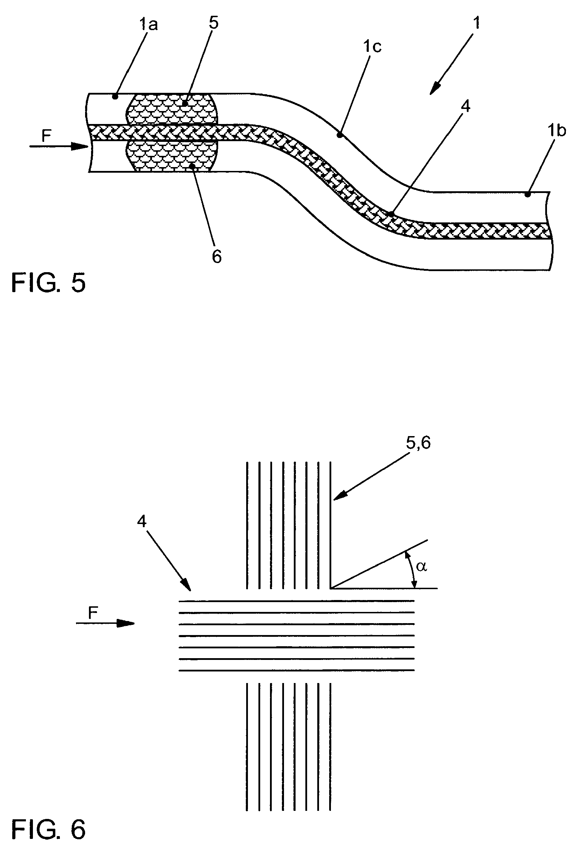

In der Fig. 5 ist der Materialaufbau des Deformationselements 1 gezeigt, bei dem die Materiallage 4 zusammen mit beidseitigen äußeren Materiallagen 5, 6 einen Dreischichtaufbau bildet. Die äußeren Materiallagen 5, 6 sind ebenfalls aus einem faserverstärkten Kunststoff hergestellt. Die Fasergewebe der drei Materiallagen können jeweils in einer umbettenden, gemeinsamen Matrix (ohne Bezugszeichen) aus Epoxydharz eingebunden sein.

Das Fasergewebe der mittleren Materiallage 4 besteht beispielhaft aus hochfesten Carbonfasern, die, wie in der Fig. 6 verdeutlicht ist, in Längsrichtung F (hauptsächliche Kraftrichtung bei einem Frontal- oder Heckcrash) des Deformationselementes 1 ausgerichtet sind. Die hochfesten Fasern können auch durch Kevlarfasern, Aramidfasern, Borfasern, etc. gebildet sein.

Hingegen sind die weniger zugfesten Fasern der Materiallagen 5 und 6 zum Beispiel durch Glasfasern gebildet und senkrecht zu den inneren Materiallagen 4 und/oder in einem Winkel α dazu angeordnet.

Die Materiallagen 4, 5, 6 können jeweils von einer Matrix aus Epoxydharz durchtränkt und umschlossen sein und durch entsprechende Aushärtung zu einem Deformationselement 1 verarbeitet sein. Dabei kann auch die eine hohe Zugfestigkeit aufweisende Materiallage 4 in Umfangsrichtung aussteifende Querfasern enthalten.

In der bevorzugten Auslegung des Deformationselements 1 (Fig. 5) kann die Materialstärke der mittleren Lage 4 gleich oder größer als die jeweilige, äußere Lage 5, 6 sein, um somit das Verformungsverhalten gezielt einzustellen. Dabei können ferner die festigkeitsmäßigen Faseranteile der äußeren Lagen 5, 6 gleich oder kleiner dem Faseranteil der mittleren Lage 4 entsprechen.

Des Weiteren können die gesamten Faseranteile in der Matrix des Deformationselements 1 zwischen 37% bis 67%, die Faseranteile der äußeren Lagen 5, 6 zwischen 17% und 72% und die Faseranteile der mittleren Lage 4 zwischen 23% und 63% liegen, um die geforderten Festigkeitseigenschaften herzustellen. Zudem betragen die Durchmesser der verwendeten Fasern bevorzugt zwischen 5µm und 17µm.

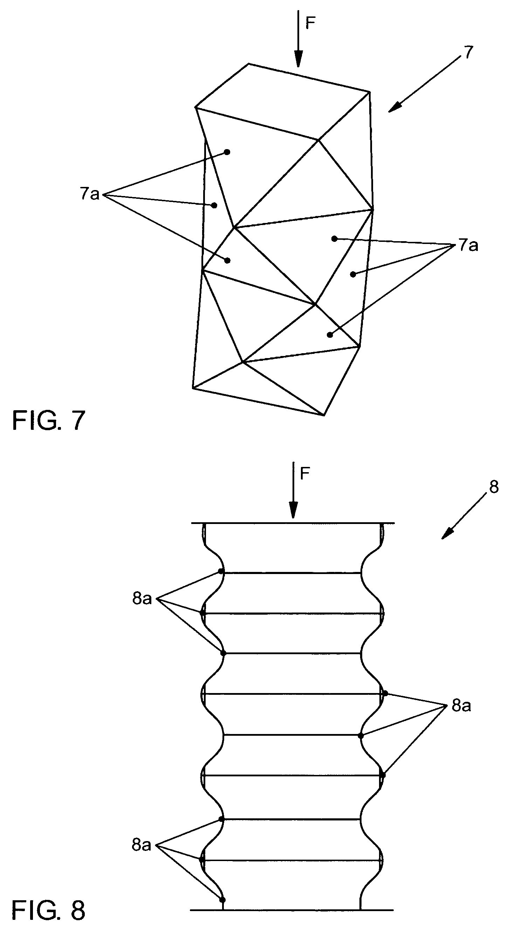

Die Fig. 7 zeigt skizzenhaft eine alternative Gestaltung eines wie vorstehend beschrieben ausgeführten Deformationselements 7, das ebenfalls im Wesentlichen rohrförmig (zum Beispiel rechteckförmigen Querschnitts) hergestellt ist und dessen die Faserlagen 4, 5, 6 aufweisende Wandgestaltung jeweils dreieckförmige beziehungsweise V-förmige Einbuchtungen 7a als Aufprallenergie abbauende Schwachstellen aufweist, die wie ersichtlich ist, umfangsmäßig verteilt und hintereinander liegend angeordnet sind.

Ein weiteres alternatives Deformationselement 8 ist in Fig. 8 angedeutet, das rohrförmig ausgeführt ist und in das als Aufprallenergie abbauende Schwachstellen in Umfangsrichtung verlaufende Wellungen 8a eingeprägt sind.

Im übrigen sind die Deformationselemente 7 (Fig. 7) und 8 (Fig. 8) wie vorstehend zum Deformationselement 1 beschrieben aus faserverstärktem Kunststoff mit einer mittleren, hochfesten Faserlage 4 und inneren und äußeren Faserlagen 5, 6 aus Glasfasern und einer diese umschließenden Matrix aus Epoxydharz, Polyesterharz und/oder aus Vinylesterharz hergestellt.

Bei einem auftretenden Crash am Kraftfahrzeug in Aufprallrichtung F werden die Deformationselemente 1, 7, 8 über die Schwachstellen 1c, 7a, 8a entsprechend verformt, wobei sich die hochfesten Fasern der mittleren Faserlage 4 entsprechend verformen und dabei die weniger festen Glasfasern der inneren und äußeren Faserlage 5, 6 aus der gemeinsamen Matrix "herausreißen" und somit die Aufprallenergie wirksam abbauen. Durch die hochfeste, mittlere Faserlage 4 bleibt aber die bauteilmäßige Verbindung zwischen dem Stoßfänger-Querträger 2 und dem aufbauseitigen Flanschabschnitt 3 des Längsträgers bestehen.

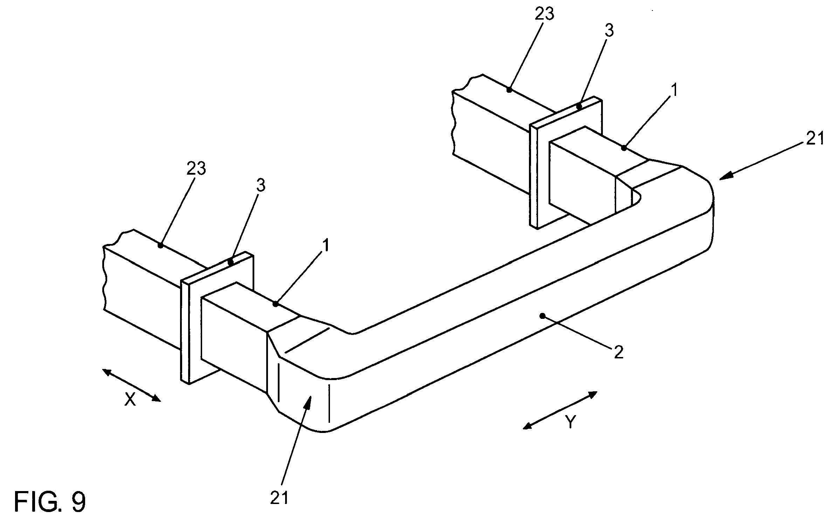

In der Fig. 9 ist eine Stoßfänger-Anordnung eines Kraftfahrzeugs dargestellt, bei der der Querträger 2 über später detailliert beschriebene Fügestellen 21 in die beiden äußeren Deformationselemente 1 übergeht. Die Deformationselemente 1 können bezüglich dem Schichtaufbau und der Funktionsweise identisch mit den in den Fig. 1 bis 8 dargestellten Deformationselementen 1 sein. Die beiden in der Fig. 9 gezeigten Deformationselemente 1 sind jeweils an Flanschplatten 3 angebunden, an denen sich Fahrzeuglängsträger 23 anschließen.

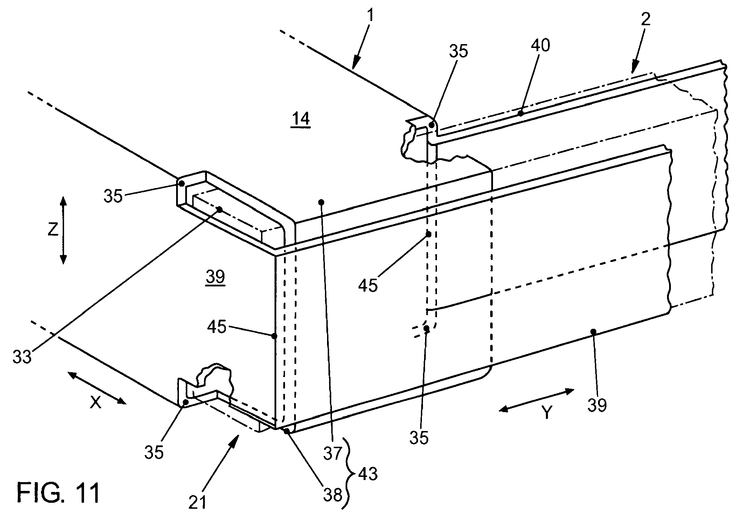

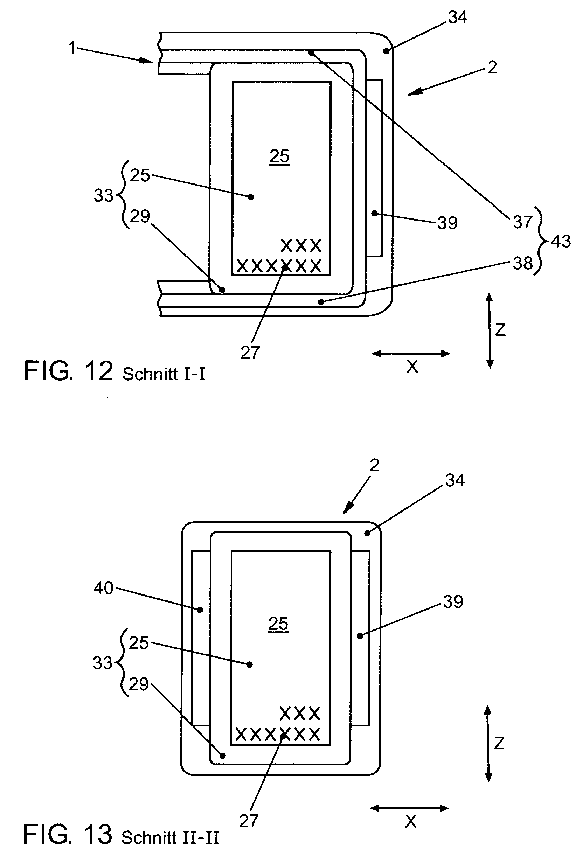

Der Querträger 2 ist gemäß den folgenden Fig. 9 bis 15 nicht als ein Blechteil, sondern als ein Kunststoff-Bauteil ausgeführt, dessen Schichtaufbau in der Fig. 12 oder 13 gezeigt ist. Demzufolge weist der Querträger 2 eine innere Materiallage 25 einem faserverstärkten Kunststoff auf, in dem ein Fasergewebe 27 (in den Fig. 11 und 12 mit einer Kreuzschraffur teilweise angedeutet) in einem Bettungswerkstoff bzw. einem Matrixwerkstoff eingebettet ist. Die innere Materiallage 25 ist mit einer äußeren Materiallage 29 überzogen. Diese kann ebenfalls aus einem faserverstärkten Kunststoff hergestellt sein, deren Fasern bidirektional ausgerichtet sind. Im Gegensatz dazu sind die Fasern des Fasergewebes 27 der inneren Materiallage 25 unidirektional in der Fahrzeugquerrichtung y ausgerichtet. Auf diese Weise ist gewährleistet, dass der Querträger 2 in der Fahrzeugquerrichtung y betrachtet eine hohe Zugfestigkeit aufweist. Die innere Materiallage 25 bildet zusammen mit der äußeren Materiallage 29 ein Querträger-Basisteil 33, das wiederum in einer äußeren Decklage 34 eingebettet ist, wie es später noch beschrieben wird. Das Querträger-Basisteil 33 ist in der Fig. 12 oder 13 als ein im Querschnitt rechteckförmiges Vollprofil ausgeführt. Anstelle dessen können jedoch auch andere beliebige Querschnittsformen verwendet werden, beispielsweise ein C-förmiger Querträger oder ein aus einem geschlossenen Hohlprofil hergestellter Querträger.

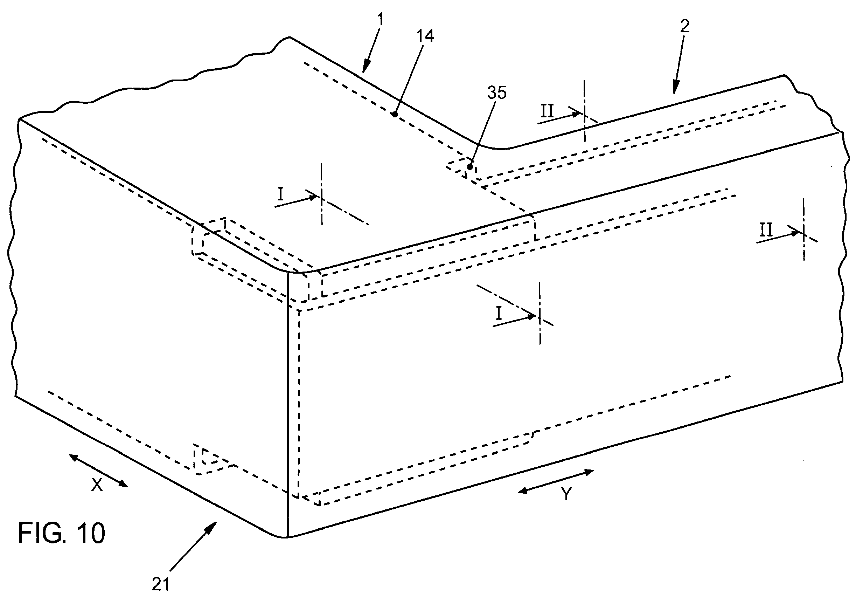

Anhand der Fig. 10 und 11 wird gemäß einem ersten Ausführungsbeispiel die Fügestelle 21 zwischen dem Deformationselement 1 und dem Querträger 2 beschrieben. Demzufolge ist das in der Fig. 11 nur gestrichelt dargestellte Querträger-Basisteil 33 dem Deformationselement 1 vorgelagert, das heißt das Querträger-Basisteil 33 überdeckt in etwa die vordere Stirnseite 35 des Querträger-Basisteils 33. Gemäß der Fig. 11 ist das Fasergewebe 14 des Deformationselementes 1 mit insgesamt vier Gewebestreifen 37 bis 41 über die Stirnseite 35 hinaus in der Fahrzeuglängsrichtung x nach vorne verlängert. Die nachfolgend beschriebenen Gewebestreifen 37 bis 41 sind als integrale Bestandteile des Querträgers 2 in dessen Kunststoffmaterial eingebettet, wobei speziell die äußere Decklage 34 des Querträgers 2 über die Gewebestreifen 37 bis 41 laminiert ist, wie es in den Fig. 12 und 13 angedeutet ist.

Wie aus der Fig. 11 hervorgeht, sind von den vier Gewebestreifen 37 bis 41 ein oberer, horizontaler Gewebestreifen 37 und ein unterer horizontaler Gewebestreifen 38 vorgesehen, die das Querträger-Basisteil 33 umgreifen, und zwar unter Bildung einer geschlossenen Schleife 43, die das Querträger-Basisteil 33 umschlingt. Die Gewebe-Schleife 43 definiert eine Aufnahmetasche, in der das Ende des Querträger-Basisteils 33 eingesetzt ist.

Zudem ist das Fasergewebe 14 des Deformationselementes 1 mit zwei seitlichen, vertikalen Gewebestreifen 39, 40 verlängert. Der in der Fig. 11 seitlich äußere, vertikale Gewebestreifen 39 ist an einer Faltkante 45 in der Fahrzeugquerrichtung y abgewinkelt und übergreift dabei die Gewebeschleife 43. Der in der Fahrzeugquerrichtung y innere, vertikale Gewebestreifen 40 ist ebenfalls an einer Faltkante 45 nach innen abgewinkelt und verläuft zusammen mit dem Gewebestreifen 39 in der Querrichtung y bis zum gegenüberliegenden Deformationselement. Die auf der gegenüberliegenden Seite vorgesehene Fügestelle 21 ist baugleich mit der in der Fig. 11 gezeigten Fügestelle 21 gebildet. Die beiden vertikal verlaufenden Gewebestreifen 39, 40 bilden dabei zusammen jeweils Querstreifen, die die Fasergewebe 14 der beiden Deformationselemente materialeinheitlich und einstückig miteinander verbinden.

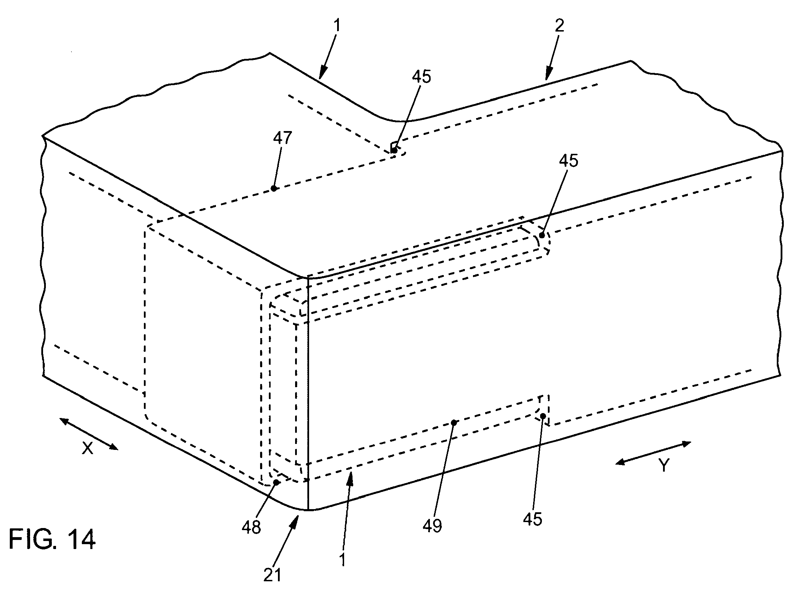

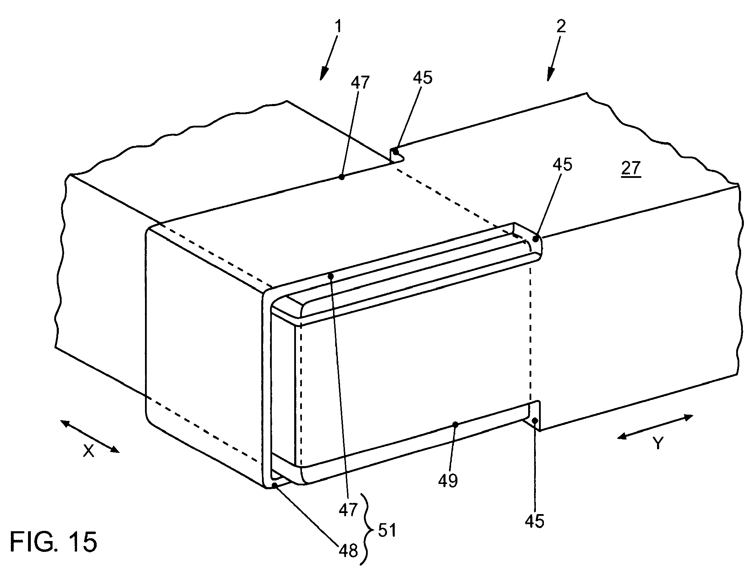

In den Fig. 14 und 15 ist die Fügestelle 21 zwischen dem Deformationselement 1 und dem Querträger 2 gemäß einem zweiten Ausführungsbeispiel gezeigt. Demzufolge ist das Deformationselement 1 in der Fahrzeugquerrichtung y nach außen dem Querträger 2 (bzw. dessen Querträger-Basisteil 33) vorgelagert. Das heißt, dass das Deformationselement 1 die Stirnseite 45 des Querträgers 2 überdeckt. Gemäß der Fig. 15 ist das Fasergewebe 27 der inneren Materiallage 25 des Querträgers 2 mit oberen und unteren, horizontalen Gewebestreifen 47, 48 sowie mit einem vorderen, vertikalen Gewebestreifen 49 verlängert.

Die nachfolgend beschriebenen Gewebestreifen 47, 48 und 49 sind als integrale Bestandteile des Deformationselements 1 in dessen Kunststoffmaterial eingebettet, wobei die äußere Decklage 34 über die Gewebestreifen 47, 48 und 49 laminiert ist.

Wie aus der Fig. 14 hervorgeht, sind von den drei Gewebestreifen 47, 48 und 49 ein oberer, horizontaler Gewebestreifen 47 und ein unterer horizontaler Gewebestreifen 48 vorgesehen, die das Deformationselement 1 umgreifen, und zwar unter Bildung einer geschlossenen Schleife 51, die das Deformationselement 1 umschlingt. Die Gewebe-Schleife 51 definiert eine Aufnahmetasche, in der das Ende des Deformationselement 1 eingesetzt ist. Zudem ist das Fasergewebe 27 (Fig. 15) des Querträgers 2 mit einem vorderen, vertikalen Gewebestreifen 49 verlängert.

## Patentansprüche

1. Deformationselement, insbesondere für einen Stoßfängerquerträger (2) eines Kraftfahrzeuges, mit zumindest einer Sollbruchstelle (S), an der im Crashfall das Deformationselement (1) in zumindest ein crashzugewandtes, sich im Crashverlauf verlagerndes Bruchsegment (1a) und in ein crashabgewandtes, ortsfestes Bruchsegment (1 b) auseinanderbricht, wobei das Deformationselement mit zumindest einer Materiallage (4) aus einem faserverstärkten Kunststoff mit einem, in einem Bettungswerkstoff (10) eingebetteten Fasergewebe (14) hergestellt ist, das nach dem Auseinanderbrechen des Deformationselements (1) zwischen den Bruchsegmenten (1a, 1b) freigelegt ist und diese miteinander verbindet, **dadurch gekennzeichnet, dass** die Materiallage (4) zusammen mit beidseitigen äußeren Materiallagen (5, 6) einen Dreischichtaufbau bildet, und dass insbesondere die äußeren Materiallagen (5, 6) ebenfalls aus einem faserverstärkten Kunststoff hergestellt sind.

2. Deformationselement nach Anspruch 1, **dadurch gekennzeichnet, dass** sich nach dem Auseinanderbrechen des Deformationselements (1) das crashzugewandte Bruchsegment (1a) am crashabgewandten ortsfesten Bruchsegment (1b) vorbeiverlagerbar ist und der freigelegte Fasergewebe-Abschnitt (12) unter Abbau von Deformationsenergie weiteres Bruchmaterial (18) aus dem Bettungswerkstoff (10) herausreißt.

3. Deformationselement nach Anspruch 1 oder 2, **dadurch gekennzeichnet, dass** der zwischen den Bruchsegmenten (1a, 1b) freigelegte Abschnitt (12) des Fasergewebes (14) im Crashverlauf zugbeansprucht ist, und/oder dass die Fasern des Fasergewebes (14) zur Steigerung der Zugfestigkeit in der Zugrichtung ausgerichtet sind.

4. Deformationselement nach einem der vorhergehenden Ansprüche, **dadurch gekennzeichnet, dass** der zwischen den Bruchsegmenten (1 a, 1b) freigelegte Abschnitt (12) des Fasergewebes (14) im Vergleich zu dem Faser-Kunststoff-Verbund des Deformationselements (1) weitgehend ohne Formstabilität sowie biegeschlaff ist, jedoch mit hoher Zugfestigkeit ausgeführt ist, und dass der Bettungswerkstoff (10) im Vergleich zum Fasergewebe (14) spröde ist.

5. Deformationselement nach einem der vorhergehenden Ansprüche, **dadurch gekennzeichnet, dass** das Fasergewebe (14) der mittleren Materiallage (4) mit einer im Vergleich zu den äußeren Materiallagen hoher Faserfestigkeit ausgebildet ist.

6. Deformationselement nach einem der vorhergehenden Ansprüche, **dadurch gekennzeichnet, dass** die Fasern der mittleren Materiallage (4) im Wesentlichen in der Längsrichtung (F) und die Fasern der äußeren Faserlagen (5, 6) in einer dazu senkrechten und/oder geneigten Richtung ausgerichtet sind.

7. Deformationselement nach einem der vorhergehenden Ansprüche, **dadurch gekennzeichnet, dass** die Fasern der mittleren Materiallage (4) durch Carbon-, Kevlar-, Aramid-, Borfasern oder dergleichen gebildet ist und/oder dass die Fasern der äußeren Lagen (5, 6) durch Glasfasern gebildet sind.

8. Deformationselement nach einem der vorhergehenden Ansprüche, **dadurch gekennzeichnet, dass** der Bettungswerkstoff (10) die Fasergewebe der Materiallagen (4, 5, 6) ein Epoxydharz, Polyesterharz und/oder ein Vinylesterharz ist.

9. Deformationselement nach einem der vorhergehenden Ansprüche, **dadurch gekennzeichnet, dass** das Deformationselement (1) ein Rohr- oder Mehrkantprofil ist, und/oder dass die Sollbruchstelle (S) ein Durchmessersprung ist, an dem die Bruchsegmente (1 a, 1 b) ineinander derart übergehen, dass bei einer crashbedingten Krafteinleitung (F) ein Übereinanderstülpen der Bruchsegmente (1a, 1b) erfolgt.

10. Stoßfänger-Anordnung mit einem Querträger (2), der in der Fahrzeugquerrichtung (y) beidseitig über jeweils ein Deformationselement (1) nach einem der vorhergehenden Ansprüche an Fahrzeug-Längsträgern (23) anbindbar ist.

11. Stoßfänger-Anordnung nach Anspruch 10, **dadurch gekennzeichnet, dass** der Querträger (2) ein insbesondere faserverstärktes Kunststoff-Bauteil ist, und dass insbesondere der Querträger (2) zusammen mit den Deformationselementen (1) eine materialeinheitliche und/oder einstückige Baueinheit bildet.

12. Stoßfänger-Anordnung nach Anspruch 10 oder 11, **dadurch gekennzeichnet, dass** der Querträger (2), insbesondere ein Querträger-Basisteil (33), in der Fahrzeuglängsrichtung (x) dem Deformationselement (1) vorgelagert ist und/oder die vordere Stirnseite (35) des Deformationselementes (1) überdeckt, und dass insbesondere das Fasergewebe (14) des Deformationselementes (1) mit zumindest einem Gewebestreifen (37 bis 40) insbesondere über die Stirnseite (35) des Deformationselementes (1) hinaus, in der Fahrzeuglängsrichtung (x) nach vorne verlängert ist, und dass der nach vorne verlängerte Gewebestreifen (37 bis 40) integraler Bestandteil des Querträgers (2) ist, insbesondere im Kunststoffmaterial des Querträgers (2) eingebettet ist.

13. Stoßfänger-Anordnung nach Anspruch 12, **dadurch gekennzeichnet, dass** das Fasergewebe (14) des Deformationselementes (1) mit einem oberen und/oder unteren, insbesondere horizontalen Gewebestreifen (37, 38) verlängert ist, zwischen denen, in der Hochrichtung (z) betrachtet, bevorzugt der Querträger (2), insbesondere ein Querträger-Basisteil (33), angeordnet ist.

14. Stoßfänger-Anordnung nach Anspruch 13, **dadurch gekennzeichnet, dass** die oberen und unteren Gewebestreifen (37, 38) des Fasergewebes (14) des Deformationselementes (1) das Querträger-Basisteil (33) umgreifen und bevorzugt eine Schleife (43) bilden, die das Querträger-Basisteil (33) umschlingt.

15. Stoßfänger-Anordnung nach Anspruch 12, 13 oder 14, **dadurch gekennzeichnet, dass** das Fasergewebe (14) des Deformationselementes (1) mit einem in der Fahrzeugquerrichtung (y) seitlich inneren und/oder seitlich äußeren, insbesondere vertikalen Gewebestreifen (39, 40) verlängert ist, zwischen denen bevorzugt der Querträger (2), insbesondere das Querträger-Basisteil (33), angeordnet ist.

16. Stoßfänger-Anordnung nach einem der Ansprüche 12 bis 15, **dadurch gekennzeichnet, dass** die in der Fahrzeuglängsrichtung (x) nach vorne verlängerten Gewebestreifen der beiden Deformationselemente (1) materialeinheitlich und/oder einstückig miteinander verbunden sind, und dass insbesondere die beiden Gewebestreifen (39, 40) zusammen einen Querstreifen bilden, der die Fasergewebe (14) der beiden Deformationselemente (1) miteinander verbindet.

17. Stoßfänger-Anordnung nach einem der Ansprüche 11 bis 16, **dadurch gekennzeichnet, dass** der Querträger (2) zumindest eine Materiallage (25) aus einem faserverstärkten Kunststoff mit einem in einem Bettungswerkstoff eingebetteten Fasergewebe (27) aufweist, und dass insbesondere zur Steigerung der Zugfestigkeit des Querträgers (2) in der Fahrzeugquerrichtung (y) die Fasern des Fasergewebes (27) in der Fahrzeugquerrichtung (y) ausgerichtet sind.

18. Stoßfänger-Anordnung nach Anspruch 17, **dadurch gekennzeichnet, dass** das Deformationselement (1) in der Fahrzeugquerrichtung (y) nach außen dem Querträger (2) vorgelagert ist, und/oder die Stirnseite (45) des Querträgers (2) überdeckt, und dass insbesondere das Fasergewebe (27) des Querträgers (2) mit zumindest einem Gewebestreifen (47 bis 49), insbesondere über die Stirnseite (45) des Querträgers (2) in der Fahrzeugquerrichtung (y) hinaus seitlich nach außen verlängert ist, und dass der seitlich verlängerte Gewebestreifen (47 bis 49) integraler Bestandteil des Deformationselementes (1) ist, insbesondere im Kunststoffmaterial des Deformationselementes (1) eingebettet ist.

19. Stoßfänger-Anordnung nach Anspruch 18, **dadurch gekennzeichnet, dass** das Fasergewebe (27) des Querträgers (2) mit einem oberen und/oder unteren, insbesondere horizontalen Gewebestreifen (47, 48) verlängert ist, zwischen denen bevorzugt das Deformationselement (1) angeordnet ist.

20. Stoßfänger-Anordnung nach Anspruch 19, **dadurch gekennzeichnet, dass** die oberen und unteren Gewebestreifen (47, 48) des Fasergewebes (27) des Querträgers (1) das Deformationselement (1) umgreifen und bevorzugt eine Schleife (51) bilden, die das Deformationselement (1) umschlingt.

21. Stoßfänger-Anordnung nach Anspruch 18, 19 oder 20, **dadurch gekennzeichnet, dass** das Fasergewebe (27) des Querträgers (2) mit einem in der Fahrzeuglängsrichtung (x) vorderen, insbesondere vertikalen Gewebestreifen (49) verlängert ist, der die vordere Stirnseite des Deformationselementes (1) überdeckt.

## Claims

1. Deformation element, in particular for a bumper crossmember (2) of a motor vehicle, with at least one predetermined breaking point (S) at which, in the event of a crash, the deformation element (1) breaks apart into at least one breaking segment (1a) which faces the crash and shifts over the course of the crash, and into a positionally fixed breaking segment (1b) which faces away from the crash, wherein the deformation element is produced by at least one material layer (4) composed of a fibre-reinforced plastic with a fibre fabric (14) which is embedded in a bedding material (10) and, after the deformation element (1) breaks apart, is exposed between the breaking segments (1a, 1b) and connects the latter to each other, **characterized in that** the material layer (4) forms a three-layered structure together with outer material layers (5, 6) on either side, and **in that** in particular the outer material layers (5, 6) are likewise produced from a fibre-reinforced plastic.

2. Deformation element according to Claim 1, **characterized in that**, after the deformation element (1) breaks apart, the breaking segment (1a) facing the crash can be shifted past the positionally fixed breaking segment (1b) facing away from the crash, and the exposed fibre fabric portion (12) tears further breaking material (18) out of the bedding material (10) with deformation energy being dissipated.

3. Deformation element according to Claim 1 or 2, **characterized in that** that portion (12) of the fibre fabric (14) which is exposed between the breaking segments (1a, 1b) is subjected to a tensile stress over the course of a crash, and/or **in that** the fibres of the fibre fabric (14) are aligned in the tension direction in order to increase the tensile strength.

4. Deformation element according to one of the preceding claims, **characterized in that** that portion (12) of the fibre fabric (14) which is exposed between the breaking segments (1a, 1b) is substantially without dimensional stability and is flexible, but is formed with a high tensile strength, in comparison to the fibre/plastic composite of the deformation element (1), and **in that** the bedding material (10) is brittle in comparison to the fibre fabric (14).

5. Deformation element according to one of the preceding claims, **characterized in that** the fibre fabric (14) of the middle material layer (4) is formed with a high fibre strength in comparison to the outer material layers.

6. Deformation element according to one of the preceding claims, **characterized in that** the fibres of the middle material layer (4) are oriented substantially in the longitudinal direction (F) and the fibres of the outer fibre layers (5, 6) are oriented in a perpendicular and/or inclined direction with respect thereto.

7. Deformation element according to one of the preceding claims, **characterized in that** the fibres of the middle material layer (4) are formed by carbon fibres, kevlar fibres, aramid fibres, boron fibres or the like, and/or **in that** the fibres of the outer layers (5, 6) are formed by glass fibres.

8. Deformation element according to one of the preceding claims, **characterized in that** the bedding material (10) of the fibre fabrics of the material layers (4, 5, 6) is an epoxy resin, polyester resin and/or a vinyl ester resin.

9. Deformation element according to one of the preceding claims, **characterized in that** the deformation element (1) is a tubular or polygonal profile, and/or in that the predetermined breaking point (S) is a diameter jump at which the breaking segments (1a, 1b) merge into one another in such a manner that, in the event of a crash-induced introduction of force (F), the breaking segments (1a, 1b) are pulled one above the other.

10. Bumper arrangement with a crossmember (2) which is connectable to vehicle longitudinal members (23) in the transverse direction (y) of the vehicle on both sides via a respective deformation element (1) according to one of the preceding claims.

11. Bumper arrangement according to Claim 10, **characterized in that** the crossmember (2) is an in particular fibre-reinforced plastics component, and **in that** in particular the crossmember (2) together with the deformation elements (1) forms a materially uniform and/or integral constructional unit.

12. Bumper arrangement according to Claim 10 or 11, **characterized in that** the crossmember (2), in particular a crossmember base part (33), is mounted in front of the deformation element (1) in the longitudinal direction (x) of the vehicle and/or covers the front end side (35) of the deformation element (1), and **in that** in particular the fibre fabric (14) of the deformation element (1) is extended with at least one fabric strip (37 to 40) forwards in the longitudinal direction (x) of the vehicle in particular beyond the end side (35) of the deformation element (1), and **in that** the forwardly extended fabric strip (37 to 40) is an integral part of the crossmember (2), in particular is embedded in the plastics material of the crossmember (2).

13. Bumper arrangement according to Claim 11, **characterized in that** the fibre fabric (14) of the deformation element (1) is extended with an upper and/or lower, in particular horizontal, fabric strip (37, 38), between which fabric strips the crossmember (2), in particular a crossmember base part (33), is preferably arranged, as viewed in the vertical direction (z).

14. Bumper arrangement according to Claim 13, **characterized in that** the upper and lower fabric strips (37, 38) of the fibre fabric (14) of the deformation element (1) engage around the crossmember base part (33) and preferably form a loop (43) which loops around the crossmember base part (33).

15. Bumper arrangement according to Claim 12, 13 or 14, **characterized in that** the fibre fabric (14) of the deformation element (1) is extended with a fabric strip (39, 40) which is laterally inner and/or laterally outer, in particular vertical, in the transverse direction (y) of the vehicle and between which fabric strips the crossmember (2), in particular the crossmember base part (33), is preferably arranged.

16. Bumper arrangement according to one of Claims 12 to 15, **characterized in that** the fabric strips of the two deformation elements (1) that are extended forwards in the longitudinal direction (x) of the vehicle are connected to each other in the same material and/or integrally, and **in that** in particular the two fabric strips (39, 40) together form a transverse strip which connects the fibre fabrics (14) of the two deformation elements (1) to each other.

17. Bumper arrangement according to one of Claims 11 to 16, **characterized in that** the crossmember (2) has at least one material layer (25) composed of a fibre-reinforced plastic with a fibre fabric (27) embedded in a bedding material, and **in that**, in particular in order to increase the tensile strength of the crossmember (2) in the transverse direction (y) of the vehicle, the fibres of the fibre fabric (27) are oriented in the transverse direction (y) of the vehicle.

18. Bumper arrangement according to Claim 17, **characterized in that** the deformation element (1) is mounted in front of the crossmember (2) to the outside in the transverse direction (y) of the vehicle and/or covers the end side (45) of the crossmember (2), and **in that** in particular the fibre fabric (27) of the crossmember (2) is extended laterally outwards with at least one fabric strip (47 to 49), in particular beyond the end side (45) of the crossmember (2), in the transverse direction (y) of the vehicle, and **in that** the laterally extended fabric strip (47 to 49) is an integral part of the deformation element (1), in particular is embedded in the plastics material of the deformation element (1).

19. Bumper arrangement according to Claim 18, **characterized in that** the fibre fabric (27) of the crossmember (2) is extended with an upper and/or lower, in particular horizontal fabric strip (47, 48), between which fabric strips the deformation element (1) is preferably arranged.

20. Bumper arrangement according to Claim 19, **characterized in that** the upper and lower fabric strips (47, 48) of the fibre fabric (27) of the crossmember (1) engage around the deformation element (1) and preferably form a loop (51) which loops around the deformation element (1).

21. Bumper arrangement according to Claim 18, 19 or 20, **characterized in that** the fibre fabric (27) of the crossmember (2) is extended with a fabric strip (49) at the front, in the longitudinal direction (x) of the vehicle, in particular a vertical fabric strip (49), said fabric strip covering the front end side of the deformation element (1).

## Revendications

1. Elément de déformation en particulier pour une traverse de pare-choc (2) d'un véhicule automobile, comprenant au moins une zone destinée à la rupture (S) au niveau de laquelle, en cas de collision, l'élément de déformation (1) se rompt en au moins un segment de rupture (1a) tourné vers la collision, se déplaçant au cours de la collision et en un segment de rupture (1b) fixe, détourné de la collision, l'élément de déformation étant fabriqué avec au moins une couche de matériau (4) en un plastique renforcé par des fibres comprenant un tissu de fibres (14) noyé dans un matériau d'enveloppement (10), lequel tissu de fibres, après la rupture de l'élément de déformation (1), est libéré entre les segments de rupture (1a, 1b) et les relie, **caractérisé en ce que** la couche de matériau (4) forme, conjointement avec des couches de matériau extérieures des deux côtés (5, 6) une structure à trois couches, et **en ce que** les couches de matériau extérieures (5, 6) sont notamment également fabriquées en un plastique renforcé par des fibres.

2. Élément de déformation selon la revendication 1, **caractérisé en ce qu'**après la rupture de l'élément de déformation (1), le segment de rupture tourné vers la collision (1a) peut être décalé devant le segment de rupture fixe détourné de la collision (1b), et la portion exposée (12) du tissu de fibres détache par déchirement un matériau de rupture supplémentaire (18) hors du matériau d'enveloppement (10) en réduisant l'énergie de déformation.

3. Élément de déformation selon la revendication 1 ou 2, **caractérisé en ce que** la portion (12) du tissu de fibres (14) exposée entre les segments de rupture (1a, 1b) est sollicitée en traction au cours de la collision et/ou **en ce que** les fibres du tissu de fibres (14) sont orientées dans la direction de traction afin d'augmenter la résistance à la traction.

4. Élément de déformation selon l'une quelconque des revendications précédentes, **caractérisé en ce que** la portion (12) du tissu de fibres (14) exposée entre les segments de rupture (1a, 1b), par comparaison avec le composite fibre-plastique de l'élément de déformation (1), est essentiellement sans stabilité de forme et souple en flexion, mais est réalisée avec une grande résistance à la traction, et **en ce que** le matériau d'enveloppement (10) est cassant par rapport au tissu de fibres (14).

5. Élément de déformation selon l'une quelconque des revendications précédentes, **caractérisé en ce que** le tissu de fibres (14) de la couche de matériau centrale (4) est réalisé avec une résistance des fibres supérieure par comparaison avec les couches de matériau extérieures.

6. Élément de déformation selon l'une quelconque des revendications précédentes, **caractérisé en ce que** les fibres de la couche de matériau centrale (4) sont essentiellement orientées dans la direction longitudinale (F) et les fibres des couches de fibres extérieures (5, 6) sont orientées dans une direction perpendiculaire à celles-ci et/ou inclinée par rapport à celles-ci.

7. Élément de déformation selon l'une quelconque des revendications précédentes, **caractérisé en ce que** les fibres de la couche de matériau centrale (4) sont formées par des fibres de carbone, de kevlar, d'aramide ou de bore ou similaire et/ou **en ce que** les fibres des couches extérieures (5, 6) sont formées par des fibres de verre.

8. Élément de déformation selon l'une quelconque des revendications précédentes, **caractérisé en ce que** le matériau d'enveloppement (10) du tissu de fibres des couches de matériau (4, 5, 6) est une résine époxy, une résine de polyester et/ou une résine d'ester vinylique.

9. Élément de déformation selon l'une quelconque des revendications précédentes, **caractérisé en ce que** l'élément de déformation (1) est un profil tubulaire ou polygonal et/ou **en ce que** la zone destinée à la rupture (S) est un saut de diamètre au niveau duquel les segments de rupture (1a, 1b) se prolongent l'un dans l'autre de telle sorte que dans le cas d'une application de force (F) provoquée par une collision, un repliement l'un sur l'autre des segments de rupture (1a, 1b) se produise.

10. Agencement de pare-choc comprenant une traverse (2) qui peut être reliée dans la direction transversale du véhicule (y) des deux côtés par le biais d'un élément de déformation respectif (1) selon l'une quelconque des revendications précédentes au niveau de longerons du véhicule (23).

11. Agencement de pare-choc selon la revendication 10, **caractérisé en ce que** la traverse (2) est un composant en plastique notamment renforcé par des fibres et **en ce que** la traverse (2) forme notamment, conjointement avec les éléments de déformation (1), une unité structurelle venue de matière et/ou d'une seule pièce.

12. Agencement de pare-choc selon la revendication 10 ou 11, **caractérisé en ce que** la traverse (2), en particulier une partie de base de la traverse (33), est placée avant l'élément de déformation (1) dans la direction longitudinale du véhicule (x) et/ou recouvre le côté frontal avant (35) de l'élément de déformation (1), et **en ce que** notamment le tissu de fibres (14) de l'élément de déformation (1) se prolonge vers l'avant dans la direction longitudinale du véhicule (x) avec au moins une bande de tissu (37 à 40), notamment au-delà du côté frontal (35) de l'élément de déformation (1), et **en ce que** la bande de tissu (37 à 40) prolongée vers l'avant fait partie intégrante de la traverse (2), en particulier est noyée dans le matériau en plastique de la traverse (2).

13. Agencement de pare-choc selon la revendication 12, **caractérisé en ce que** le tissu de fibres (14) de l'élément de déformation (1) se prolonge par une bande de tissu supérieure et/ou inférieure, en particulier horizontale (37, 38), entre lesquelles, vu dans la direction verticale (z), est de préférence disposée la traverse (2), en particulier une partie de base de la traverse (33).

14. Agencement de pare-choc selon la revendication 13, **caractérisé en ce que** les bandes de tissu supérieure et inférieure (37, 38) du tissu de fibres (14) de l'élément de déformation (1) s'engagent autour de la partie de base de la traverse (33) et forment de préférence une boucle (43) qui entoure la partie de base de la traverse (33).

15. Agencement de pare-choc selon la revendication 12, 13 ou 14, **caractérisé en ce que** le tissu de fibres (14) de l'élément de déformation (1) est prolongé avec une bande de tissu (39, 40) latérale intérieure et/ou latérale extérieure dans la direction transversale du véhicule (y), en particulier verticale, entre lesquelles est disposée de préférence la traverse (2), en particulier la partie de base de la traverse (33).

16. Agencement de pare-choc selon l'une quelconque des revendications 12 à 15, **caractérisé en ce que** les bandes de tissu prolongées vers l'avant dans la direction longitudinale du véhicule (x) des deux éléments de déformation (1) sont connectées l'une à l'autre d'une seule pièce et/ou dans le même matériau unitaire, et **en ce que** notamment les deux bandes de tissu (39, 40) forment ensemble une bande transversale qui relie ensemble les tissus de fibres (14) des deux éléments de déformation (1).

17. Agencement de pare-choc selon l'une quelconque des revendications 11 à 16, **caractérisé en ce que** la traverse (2) présente au moins une couche de matériau (25) en un plastique renforcé par des fibres avec un tissu de fibres (27) noyé dans un matériau d'enveloppement, et **en ce que** notamment pour augmenter la résistance à la traction de la traverse (2) dans la direction transversale du véhicule (y), les fibres du tissu de fibres (27) sont orientées dans la direction transversale du véhicule (y).

18. Agencement de pare-choc selon la revendication 17, **caractérisé en ce que** l'élément de déformation (1) est monté avant la traverse (2) vers l'extérieur dans la direction transversale du véhicule (y) et/ou recouvre le côté frontal (45) de la traverse (2), et **en ce que** notamment le tissu de fibres (27) de la traverse (2) est notamment prolongé latéralement vers l'extérieur au-delà du côté frontal (45) de la traverse (2) dans la direction transversale du véhicule (y) avec au moins une bande de tissu (47 à 49), et **en ce que** la bande de tissu prolongée latéralement (47 à 49) fait partie intégrante de l'élément de déformation (1), en particulier est noyée dans le matériau en plastique de l'élément de déformation (1).

19. Agencement de pare-choc selon la revendication 18, **caractérisé en ce que** le tissu de fibres (27) de la traverse (2) est prolongé avec une bande de tissu supérieure et/ou inférieure, en particulier horizontale (47, 48), entre lesquelles est de préférence disposé l'élément de déformation (1).

20. Agencement de pare-choc selon la revendication 19, **caractérisé en ce que** les bandes de tissus supérieure et inférieure (47, 48) du tissu de fibres (27) de la traverse (1) viennent en prise autour de l'élément de déformation (1) et forment de préférence une boucle (51) qui entoure l'élément de déformation (1).

21. Agencement de pare-choc selon la revendication 18, 19 ou 20, **caractérisé en ce que** le tissu de fibres (27) de la traverse (2) est prolongé avec une bande de tissu avant dans la direction longitudinale du véhicule (x), en particulier verticale (49), qui recouvre le côté frontal avant de l'élément de déformation (1).
